# EUROPÄISCHE PATENTSCHRIFT

(11) **EP 3 765 938 B1**
(45) Veröffentlichungstag und Bekanntmachung des Hinweises auf die Patenterteilung: **12.10.2022**
(21) Anmeldenummer: 20706184.7
(22) Anmeldetag: 17.02.2020
(51) Int. Cl.: G05G 5/03, G06F 3/01, B60K 37/06

(54) **EINGABEANORDNUNG MIT AKTIVEM HAPTISCHEM FEEDBACK UND STÖRSCHWINGUNGSUNTERDRÜCKUNG**
INPUT ASSEMBLY WITH ACTIVE HAPTIC FEEDBACK AND NOISE SUPPRESSION
ARRANGEMENT DE SAISIE AVEC RÉTROACTION HAPTIQUE ACTIVE ET SUPPRESSION DES OSCILLATIONS PARASITES

(30) Priorität: 13.05.2019 DE 102019112461
(43) Veröffentlichungstag der Anmeldung: 20.01.2021
(73) Patentinhaber: PREH GmbH, 97616 Bad Neustadt a.d. Saale (DE)
(72) Erfinder: Bodenstein, Tobias, 97616 Salz (DE); Kramlich, Andreas, 97616 Bas Neustadt a.d. Saale (DE)
(74) Vertreter: Lohmanns, Bernard
(86) Internationale Anmeldenummer: PCT/EP2020/054060
(87) Internationale Veröffentlichungsnummer: WO 2020/229000

(56) Entgegenhaltungen:
- EP-A1- 3 650 993
- WO-A2-2019/003254
- DE-A1-102016 005 875
- DE-A1-102016 223 021
- US-A1- 2018 364 806
- US-B2- 8 760 248
- US-B2- 9 690 412

## Beschreibung

Die Erfindung betrifft eine Eingabeanordnung mit aktivem haptischem Feedback. Als aktives haptisches Feedback wird eine durch einen Aktuator, auch Aktor genannt, bewirkte Bewegung eines zur Eingabeanordnung gehörigen Eingabeteils verstanden, die bei Berührung des Eingabeteils durch einen Bediener als haptischer Sinneseindruck wahrnehmbar ist. Gattungsgemäße Eingabeanordnungen weisen einen Träger sowie ein entlang wenigstens einer Bewegungsrichtung mittels einer schwingbeweglichen Lagerung am Träger gelagertes Eingabeteil auf. Das Eingabeteil weist dabei eine zur Berührung durch einen Bediener bestimmte Eingabefläche sowie eine Berührdetektionseinrichtung zur Detektion einer Berührung der Eingabefläche durch den Bediener auf. Ferner ist ein Aktuator zur Anregung einer Bewegung des Eingabeteils entlang der Bewegungsrichtung mittels eines elektrischen Ansteuersignals, um ein haptisches Feedback bei dem Bediener zu erzeugen, vorgesehen.

Typischerweise ist das haptische Feedback, d.h. die Beaufschlagung des Aktuators mit dem elektrischen Ansteuersignal durch die Berührung der Eingabefläche und/oder das Beaufschlagen der Eingabefläche mit einer einen vorgegebenen Kraftwert übersteigenden Betätigungskraft getriggert. Erwünscht ist dabei meist eine erzwungene Bewegung des Eingabeteils, die dem Bediener einen Sinneseindruck vermittelt, die er bei der Betätigung eines mechanischen Tastschalters erfährt. Es hat sich gezeigt, dass dieser Sinneseindruck vergleichswiese gut durch kurze einmalige Auslenkungen des Eingabeteils bei möglichst geringem nachfolgenden Überschwingen hervorgerufen werden kann. Die Schwierigkeit, die sich dabei stellt, ergibt sich in erster Linie auf Seiten der Aktuatorik. Die dabei zur Anwendung kommende Technologie muss einerseits starke und schnelle Auslenkungen des Eingabeteils bewirken können, möglichst wenig anfällig gegenüber elektromagnetischer Störung sein, selber möglichst wenig elektromagnetisch stören und dazu möglichst haltbar, bauraumsparend und kostengünstig sein. Aus diesem Grund haben sich elektromagnetisch arbeitende Aktuatoren aus einer elektrischen Spule und einer mit dem durch die Spule erzeugten magnetischen Feld zusammenwirkendem Anker als geeignet erwiesen.

Diese weisen neben dem schwingend gelagerten Eingabeteil üblicherweise eine federnd gelagerte Zusatzmasse auf, die zur Erzeugung bzw. Verstärkung des haptischen Effekts dienen. Solche Aktuatoren sind beispielsweise als sogenannter Linear-Resonant-Actuator (kurz: LRA) käuflich zu erwerben und eignen sich besonders für eine vibrierende Schwingungsanregung. Aus der WO 2012052635 A1 ist beispielsweise ein Aktuator mit schwingend gelagerter Zusatzmasse bekannt, der unmittelbar am Eingabeteil befestigt ist. Dadurch übertragen sich auch die Nachschwingungen der Zusatzmasse nahezu ungedämpft auf das Eingabeteil. Der Bediener erwartet aber als haptisches Feedback eine möglichst kurzfristige Auslenkung des Eingabeteils. Das Nachschwingen wird, weil es den haptischen Sinneseindruck der Erstauslenkung verwischt, als störend empfunden. Ziel ist es daher, die Übertragung des Nachschwingens der vom Aktuator bereitgestellten federnd gelagerten Zusatzmasse auf das Eingabeteil zu mindern oder gar zu unterbinden.

Eine Eingabeanordnung gemäß dem Oberbegriff des Anspruchs 1 ist aus der EP 3 650 993 A1 bekannt. Weitere gattungsgemäße Eingabeanordnungen sind jeweils aus der US 2018/364806 A1, der US 9 690 412 B2 sowie der WO 2019/003254 A2 bekannt.

Die Erfinder haben sich daher die Aufgabe gestellt, ein Eingabeanordnung bereitzustellen, bei der für die Erzeugung des aktiven haptischen Feedbacks auf elektromagnetische Aktuatoren mit federnd gelagerter Zusatzmasse mit den damit verbundenen Vorteilen, wie Kosten- und Bauraumreduktion und Störunanfälligkeit, zurückgegriffen werden kann, aber der damit einhergehende Nachteil der unerwünschten Übertragung der Nachschwingungen auf das Eingabeteil minimiert werden kann. Diese Aufgabe wird durch eine Eingabeanordnung gemäß Anspruch 1 gelöst. Vorteilhafte Ausgestaltungen sind jeweils Gegenstand der abhängigen Ansprüche.

Bei der erfindungsgemäßen Eingabeanordnung handelt es sich um eine berührempfindliche und ein haptisches Feedback erzeugende Eingabeanordnung, auch als berührempfindliche Eingabeanordnung mit aktivem haptischem Feedback bezeichnet. Die Eingabeanordnung weist einen Träger auf. Dieser dient beispielsweise der Festlegung der Eingabeanordnung an einer Verkleidung, einem Armaturenbrett, einer Konsole oder an der Fahrzeugkarosserie eines Fahrzeugs, insbesondere eines Kraftfahrzeugs.

Die erfindungsgemäße Eingabeanordnung weist ferner ein entlang wenigstens einer Bewegungsrichtung schwingbeweglich am Träger gelagertes Eingabeteil auf. Das Eingabeteil weist eine zur Berührung durch einen Bediener bestimmte Eingabefläche und eine Berührdetektionseinrichtung zur Detektion einer Berührung der Eingabefläche durch den Bediener auf. Der Begriff Eingabeteil ist weit auszulegen und soll beispielsweise ein solches Eingabeteil beinhalten, bei dem lediglich die Berührung an sich, also nicht ortsaufgelöst, detektiert wird, wie ein Taster mit Berührdetektion. Es sollen aber ortsauflösend detektierende Eingabeteile, wie ein Touchpad oder ein Touchscreen, erfindungsgemäß umfasst sein, bei denen zusätzlich zum Berührdetektionsergebnis eine Information betreffend den Berührort ausgegeben wird. Derartige Eingabeteile weisen beispielsweise einen Elektrodenstruktur zur Erzeugung eines Arrays von Messkapazitäten auf, deren Beeinflussung durch die Berührung mit einem Finger detektiert wird.

Unter einer schwingbeweglichen Lagerung wird eine Lagerung des Eingabeteils am Träger verstanden, bei der das Eingabeteil entgegen jeweils einer Rückstellkraft, die auf das Eingabeteil in eine Ruhestellung rückstellend wirkt, aus einer Ruhestellung parallel zur Bewegungsrichtung verlagerbar ist. D.h. aufgrund vorgesehener Rückstellmittel, wie Federn, wird eine Bewegung aus und zurück in eine Ruhestellung des Eingabeteils bewirkt. Beispielsweise ist das Eingabeteil mittels mehrerer, beispielsweise 3 oder 4, Blattfedern gelagert. Bevorzugt ist die Bewegungsrichtung im Wesentlichen orthogonal zur Eingabefläche. Gemäß einer alternativen Ausgestaltung ist die Bewegungsrichtung parallel zur Eingabefläche ausgerichtet. Gemäß einer bevorzugten Ausgestaltung umfassen die Mittel zur schwingbeweglichen Lagerung ferner ein oder mehrere Schwingungsdämpfer zur Bewirkung einer Dämpfung der Relativbewegung zwischen dem Eingabeteil und dem Träger.

Erfindungsgemäß ist ferner ein elektromagnetischer Aktuator zur Anregung einer Bewegung des Eingabeteils entlang der Bewegungsrichtung mittels eines elektrischen Ansteuersignals vorgesehen, um bei Berührung durch den Bediener ein haptisches Feedback bei dem Bediener zu erzeugen, indem dieser die Bewegung des Eingabeteils haptisch wahrnimmt. Die Wirkrichtung des Aktuators entspricht dabei im Wesentlichen der Bewegungsrichtung. Als ein elektromagnetischer Aktuator wird ein Aktuator verstanden, der eine elektrische Spule und eine mit dem durch die Spule bewirkten magnetischen Feld zusammenwirkenden Anker, beispielsweise aus para- oder ferromagnetischem oder permanentmagnetischem Material, aufweist. Der Aktuator weist regelmäßig ein antreibendes Teil und ein angetriebenes Teil auf, die auch zusammenfallen können. Bezüglich der Bauweise soll der Begriff elektromagnetischer Aktuator nicht einschränkend verstanden werden, beispielsweise kann sich die Spule als angetriebenes Teil unter Beaufschlagen eines elektrischen Ansteuersignals relativ zum Anker bewegen und der Anker ruhen oder umgekehrt kann der Anker das angetriebene Teil sein. Ferner kann der Anker als Tauchanker ausgebildet sein, wobei der Anker während der Beaufschlagung mit dem Ansteuersignal und seiner sich daraus ergebenden Bewegung innerhalb des von der Spule umschlossenen Hohlvolumens zumindest teilweise verbleibt. Bevorzugt ist der Aktuator als Linear-Resonant-Actuator (LRA) ausgebildet.

Erfindungsgemäß weist der Aktuator eine federnd gelagerte Zusatzmasse auf und der Aktuator ist über einen Schwingungsisolator an dem Eingabeteil befestigt. Bevorzugt ist vorgesehen, dass der Schwingungsfreiheitsgrad der Zusatzmasse parallel zur Bewegungsrichtung ist. In einer bevorzugten Ausgestaltung stützt sich der Aktuator nicht am Träger ab, um den Träger vom Aktuator zu entkoppeln. Bevorzugt ist der Aktuator ausschließlich an dem Eingabeteil und noch bevorzugter ausschließlich an dem Eingabeteil und bei letzterem ausschließlich über den Schwingungsisolator am Eingabeteil befestigt. Als Schwingungsisolator wird ein Bauteil verstanden, durch das die Übertragung der Schwingung der Zusatzmasse auf das Eingabeteil gedämpft und/oder entkoppelt wird. Angestrebt wird somit eine geminderte Übertragung bis Entkoppelung der Schwingung der aktuatorseitigen Zusatzmasse von dem Eingabeteil. Beispielsweise unterscheidet sich die Eigenfrequenz des Schwingungsisolators zumindest in Bewegungsrichtung von der des Schwingungssystems aus der Zusatzmasse und seiner federnden Lagerung. Die Eigenfrequenz des Schwingungsisolators wird beispielsweise u.a. bestimmt durch die Elastizität des Schwingungsisolators in Bewegungsrichtung.

Durch den Schwingungsisolator kann nunmehr bei einer gewünschten Stoßanregung des Eingabeteils auf solche Aktuatoren mit die aktuatorische Anregung verstärkender, schwingend gelagerter Zusatzmasse zurückgegriffen werden, ohne dass sich deren Nachschwingverhalten negativ auf das haptische Feedback auswirkt. Bezüglich der Bestimmung der Eigenfrequenzen wird beispielsweise auf generalisierte Koordinaten zurückgegriffen, bzw. jeweils auf den Schwingungsfreiheitsgrad in Bewegungsrichtung abgestellt. Ferner bestimmt sich die Eigenfrequenz des Schwingungssystems aus der Zusatzmasse und seiner federnden Lagerung gegebenenfalls nicht nur durch den Massewert der Zusatzmasse sondern durch die Masse einer weiteren mitbewegten Komponente die starr mit der Zusatzmasse verbunden ist.

Bevorzugt weist der Aktuator bei Beaufschlagen mit dem elektrischen Ansteuersignal ein angetriebenes Teil, wie die Spule oder den Anker, auf, das über den Schwingungsisolator am Eingabeteil befestigt ist und an dem die Zusatzmasse federnd gelagert ist. Beispielsweise ist in einer Ausführungsform der Anker als angetriebenes Teil über den Schwingungsisolator an dem Eingabeteil befestigt, während die Zusatzmasse federnd gegenüber dem Anker gelagert ist, beispielsweise zusammen mit der Spule. In einer alternativen Ausführungsform ist die Spule als angetriebenes Teil über den Schwingungsisolator am Eingabeteil befestigt, während die Zusatzmasse federnd an der Spule befestigt ist. Bevorzugt weist die Eingabeanordnung eine Ansteuerelektronik zur Beaufschlagung des Aktuators mit dem Ansteuersignal auf, wobei das Ansteuersignal als Pulssignal, wie eine Gausspulssignal, oder als Sinus- oder als Cosinussignal, bevorzugt als Rechtecksignal, ausgebildet ist. Meist bevorzugt ist das Ansteuersignal durch Pulsweitenmodulation mittels der Ansteuerelektronik erzeugt.

Erfindungsgemäß ist die Eigenfrequenz des Schwingungssystems aus der Zusatzmasse und seiner federnden Lagerung um einen Faktor A= √2 größer als eine Eigenfrequenz des Schwingungsisolators. Dadurch liegt die Eigenfrequenz der federnd gelagerten Zusatzmasse als Anregungsfrequenz im Isolationsbereich der frequenzabhängigen Übertragungsfunktion des Schwingungsisolators, die durch die Dämpfungseigenschaft des Schwingungsisolators bestimmt wird. Um den zeitlichen Abstand aufeinander abfolgender Stoßanregungen des Eingabeteils durch den Aktuator verringern zu können, werden vergleichsweise hohe Dämpfungen des Schwingungsisolators und des Schwingungssystems aus der Zusatzmasse und seiner federnden Lagerung bevorzugt. Bevorzugt beträgt die Dämpfung bei einer Masse von 40g der Zusatzmasse mehr als 5 Ns/m, noch bevorzugter 10 Ns/m.

Bevorzugt ist der Schwingungsisolator ganz oder teilweise aus einem Kunststoff, bevorzugt Elastomer, ausgebildet. Bevorzugter ist der Schwingungsisolator ganz oder teilweise aus einem Schaumstoff, wie PUR-Schaumstoff, PE-Schaumstoff, Moosgummi, Silikonelastomer, Silikonkautschuk und/oder Zellkautschuk ausgebildet. Beispielsweise ist der Schwingungsisolator als Verbundteil ausgebildet und weist beispielsweise eine Kunststoffkomponente und eine damit kraft-, form- oder stoffschlüssig verbundene Metallkomponente auf.

Beispielsweise ist der Schwingungsisolator kraft- oder stoffschlüssig an dem Eingabeteil und dem Aktuator, bevorzugt dessen angetriebenem Teil befestigt. Beispielsweise ist eine Klebstoffschicht zwischen dem Schwingungsisolator und dem Aktor und zwischen dem Schwingungsisolator und dem Eingabeteil vorgesehen.

Bevorzugt ist der Schwingungsisolator zumindest in der Ruhestellung des Eingabeteils elastisch vorgespannt zwischen Aktuator und Eingabeteil angeordnet, um zu erreichen, dass die schwingungsisolierende Wirkung in den zwei entgegengesetzten Schwingungsrichtungen der Zusatzmasse gleichmäßig ist.

Bevorzugt ist die Dicke des Schwingungsisolators in Bewegungsrichtung größer als die Maximalamplitude des Schwingungssystems aus der Zusatzmasse und seiner federnden Lagerung, um ein "hartes" Anstoßen des Aktuators am Eingabeteil insbesondere bei elastisch vorgespanntem Schwingungsisolator zu vermeiden. Bevorzugter beträgt die Dicke des Schwingungsisolators in Bewegungsrichtung mehr als das Doppelte, noch bevorzugter mehr als das Dreifache der Maximalamplitude des Schwingungssystems aus der Zusatzmasse und seiner federnden Lagerung. Beispielsweise liegt die Dicke des Schwingungsisolators in einem Bereich von 1,0 mm bis 5,0 mm, noch bevorzugter im Bereich von 2,0 mm bis 4,0 mm, wie 2,5 mm.

Um die Haftung des Schwingungsisolator am Eingabeteil bzw. Aktuator zu verbessern, ist der Schwingungsisolator gemäß einer bevorzugten Ausgestaltung als Integralschaumstoff ausgebildet.

Die erfindungsgemäßen Ausführungsformen eignen sich insbesondere ein vom Bediener als "präzise" empfundenes haptisches Feedback zu erzeugen. Es ist allgemein aus der Literatur bekannt, dass das haptische Auflösungsvermögen des menschlichen Fingers zwei abfolgende Schwingungsausschläge erst ab einem zeitlichen Abstand von ~25ms als getrennt wahrnimmt. Somit werden alle in diesem Zeitintervall liegenden Schwingungen, die das Eingabeteil erfährt und über die Eingabefläche in den Finger des Bedieners einkoppelt, als ein einziger "haptischer Impuls" wahrgenommen. Die am Eingabeteil gemessene Systemantwort auf die Anregung durch den Aktuator, ist also erfindungsgemäß durch geschickte Wahl des Ansteuersignals und/oder der durch den Schwingungsisolator bewirkten Dämpfung und/oder einer durch den optionalen Schwingungsdämpfer bewirkten weiteren Dämpfung so gestaltet, dass die maximal erreichbare Amplitude der Systemantwort, auch absolute Maximalamplitude genannt, innerhalb eines Zeitfensters von < 20ms, bevorzugt 15ms, erreicht ist, welches beispielsweise durch die erste haptisch merkbare Schwingungsauslenkung angetriggert, d.h. ausgelöst, ist. Der Einfachheit halber und eine nahezu unverzögerte Schwingungsreaktion des Eingabeteils auf das Ansteuersignal voraussetzend wird hier angenommen, dass das vorgenannte Zeitfenster durch den Beginn des Ansteuersignals angetriggert ist.

Meist bevorzugt wird die erste absolute Maximalamplitude mit der ersten oder spätestens zweiten Auslenkung des Eingabeteils erreicht.

Erfindungsgemäß sind das Ansteuersignal und/oder die durch den Schwingungsisolator bewirkte Dämpfung und/oder die durch den optionalen Schwingungsdämpfer bewirkte Dämpfung so gewählt, dass die "Abklingzeit" der am Eingabeteil gemessenen Systemamplitude, gemessen von 100% der Maximalamplitude auf 10% oder weniger der Maximalamplitude < 30ms, bevorzugt < 25ms, meist bevorzugt <20ms ist.

Dazu ist ferner die Dauer des elektrischen Ansteuersignals, welches im Allgemeinen periodisch ist und mit dem der Aktuator beaufschlagt wird, auf eine Dauer deutlich unter 20ms, d.h auf wenige Perioden, wie maximal 2 Perioden beschränkt.

Durch diese Art der Ansteuerung und diese Art des Aktuators kann ein haptisches Feedback mit geringem Aufwand erzeugt werden, das als einzelner Impuls wahrgenommen werden. Alternativ kann die gewünschte Abklingzeit dadurch eingestellt werden, wenn der Aktuator mit einem Ansteuersignal gegenphasig, d.h. beispielsweise mit einem Signal entgegengesetzter Polarität angesteuert wird. Dies erfordert aber eine genaue Kalibrierung oder Steuerung bzw. zusätzliche Sensorik.

Die Erfindung betrifft ferner die Verwendung der Eingabeanordnung in einer der zuvor beschriebenen Ausführungsformen in einem Kraftfahrzeug.

Die nachfolgenden Figuren erläutern die Erfindung zusätzlich. Die in den Figuren gezeigte Ausführungsform ist dabei nur beispielhaft zu verstehen und stellt lediglich eine bevorzugte Ausführungsvariante dar. Es zeigt:
- Fig.1: eine schematische Schnittdarstellung einer ersten erfindungsgemäßen Ausführungsform der Eingabeanordnung 1;
- Fig. 2: eine schematische Schnittdarstellung einer zweiten erfindungsgemäßen Ausführungsform der Eingabeanordnung 1;
- Fig. 3a - 3c: Darstellungen verschiedener erfindungsgemäßer Ansteuersignale und zugehörige Systemantworten.

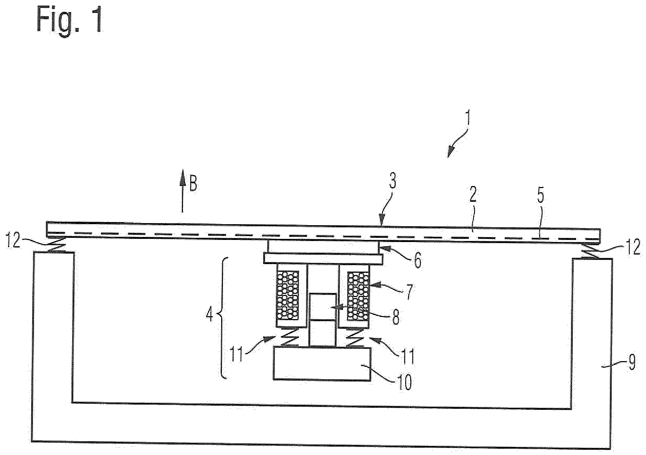

Figur 1 zeigt schematisch eine erste Ausführungsform der erfindungsgemäßen Eingabeanordnung 1. Diese weist einen Träger 9 auf, an dem ein Eingabeteil 2 beweglich und in eine Ruhestellung elastisch rückstellend mittels Federn aufweisende Lagerungsmittel 12 entlang einer Bewegungsrichtung B gelagert ist. Die Lagerungsmittel 12 weisen optional einen oder mehrere nich näher gezeigte Schwingungsdämpfer zur Bedämpfung der Bewegung des Eingabeteils 2 relativ zum Träger 9 auf. Das Eingabeteil 2 weist eine zur Berührung durch einen nicht dargestellten Bediener bestimmte Eingabefläche 3 auf. Es handelt sich bei dem Eingabeteil 2 um einen Touchscreen oder ein Touchpad, womit eine ortsauflösende Berührdetektion aufgrund einer aus einer Elektrodenstruktur gebildeten Messkapazitätsstruktur als Berührdetektionseinrichtung 5 ermöglicht ist. Die Eingabeanordnung 1 weist ferner einen elektromagnetischen Aktuator 4 aus einer elektrischen Spule 7 und einem mit dem magnetischen Feld der Spule 7 zusammenwirkenden, bevorzugt wenigstens teilweise permanentmagnetischen, Anker 8 auf. Bei Beaufschlagung des Aktuators 4 mit einem von einer nicht dargestellten Auswerteinheit der Eingabeanordnung 1 bereitgestellten elektrischen Ansteuersignal kommt es zur Auslenkung und Bewegung des Eingabeteils 2 in Bewegungsrichtung B, was vom Bediener als haptisches Feedback und als Bestätigung der vorgenommenen durch Berührung und/oder Betätigung vorgenommenen Bedienung der Eingabeanordnung 1 wahrgenommen wird. Beispielsweise wird das haptische Feedback durch die Detektion einer Berührung auf der Eingabefläche 3 durch Berührdetektionseinrichtung 5 getriggert. Der elektromagnetische Aktuator 4 ist zwischen dem Eingabeteil 2 und dem Träger 9 angeordnet und hat eine Wirkrichtung in Bewegungsrichtung B, ohne sich am Träger 9 abzustützen. Der elektromagnetische Aktuator 4 ist als Linear-Resonant-Actuator aufgebaut und weist ferner eine mittels der Federn 11 federnd gelagerte Zusatzmasse 10 auf, deren Schwingungsfreiheitsgrad im Wesentlichen parallel zur Bewegungsrichtung B ist und die starr am Anker 8 befestigt ist, während der Anker 8 und die Zusatzmasse 10 über die Federn 11 federnd an der Spule 7 befestigt sind. Die Spule 7 des Aktuators 4 ist ausschließlich über einen Schwingungsisolator 6 am Eingabeteil 2 an der der Eingabefläche 3 abgewandten Seite, beispielsweise im Bereich des Schwerpunkts des Eingabeteils 2 befestigt. Bei Beaufschlagung der Spule mit einem pulsförmigen Ansteuersignal erfährt die Spule 7 einen Impuls, der über den Schwingungsisolator 6 auf das Eingabeteil 2 und damit durch den Schwingungsisolator 6 gedämpft, übertragen wird, während die Zusatzmasse 10 mit dem Anker 8 den Gegenimpuls aufnehmen. Um das Eingabeteil 2 von dem Nachschwingen der Zusatzmasse 10 samt Anker 8 so weit wie möglich zu entkoppeln, ist der Schwingungsisolator 6 vorgesehen. Dieser besteht im Wesentlichen aus einem Elastomer-Schaumstoff, der auf den für das Anliegen an das Bedienteil 2 und den Aktuator 4 vorgesehen Flächen mit einer Klebeschicht versehen ist. Um eine effektive Schwingungsisolation zu bewirken, ist die Eigenfrequenz der federnd gelagerten Zusatzmasse 10 in Bewegungsrichtung B um den Faktor A= √2 größer als die Eigenfrequenz des Schwingungsisolators 6.

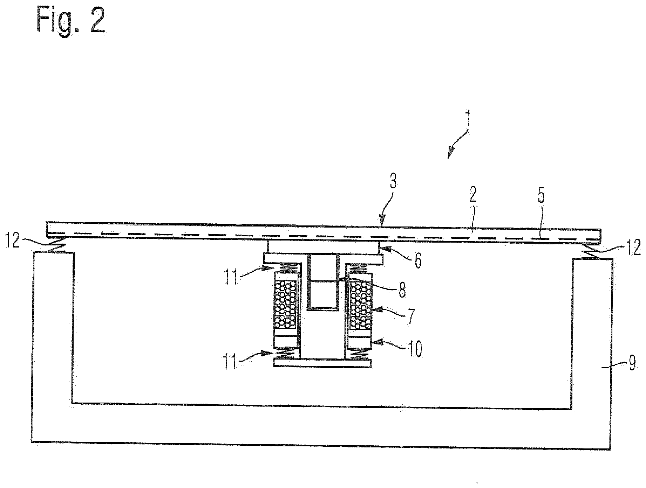

Figur 2 zeigt schematisch eine zweite Ausführungsform der erfindungsgemäßen Eingabeanordnung 1. Diese weist ebenfalls einen Träger 9 auf, an dem ein Eingabeteil 2 beweglich und in eine Ruhestellung elastisch rückstellend mittels Federn 12 entlang einer Bewegungsrichtung B gelagert ist. Es können ferner nicht dargestellte Schwingungsdämpfer vorgesehen sein, um die Bewegung des Eingabeteils 2 gegenüber dem Träger zu bedämpfen. Das Eingabeteil 2 weist eine zur Berührung durch einen nicht dargestellten Bediener bestimmte Eingabefläche 3 auf. Es handelt sich bei dem Eingabeteil 2 um einen Touchscreen oder ein Touchpad, womit eine ortsauflösende Berührdetektion aufgrund einer aus einer Elektrodenstruktur gebildeten Messkapazitätsstruktur als Berührdetektionseinrichtung 5 ermöglicht ist. Die Eingabeanordnung 1 weist ferner einen elektromagnetischen Aktuator 4 aus einer elektrischen Spule 7 und einem mit dem magnetischen Feld der Spule 7 zusammenwirkenden, bevorzugt wenigstens teilweise permanentmagnetischen, Anker 8 auf. Bei Beaufschlagung des Aktuators 4 mit einem von einer nicht dargestellten Auswerteinheit der Eingabeanordnung 1 bereitgestellten elektrischen Ansteuersignal kommt es zur Auslenkung und Bewegung des Eingabeteils 2 in Bewegungsrichtung B, was vom Bediener als haptisches Feedback und als Bestätigung der vorgenommenen durch Berührung und/oder Betätigung vorgenommenen Bedienung der Eingabeanordnung 1 wahrgenommen wird. Der elektromagnetische Aktuator 4 ist zwischen dem Eingabeteil 2 und dem Träger 9 angeordnet und hat eine Wirkrichtung in Bewegungsrichtung B ohne sich am Träger 9 abzustützen. Der elektromagnetische Aktuator 4 ist als Linear-Resonant-Actuator aufgebaut und weist ferner eine mittels der Federn 11 federnd gelagerte Zusatzmasse 10 auf, deren Schwingungsfreiheitsgrad im Wesentlichen parallel zur Bewegungsrichtung B ist und die im Gegensatz zur ersten Ausführungsform nicht starr am Anker 8 sondern hier starr an der Spule 7 befestigt ist, während die Spule 7 und die Zusatzmasse 10 über die Federn 11 federnd gegenüber dem Anker 8 gelagert sind. Der Anker 8 des Aktuators 4 ist ausschließlich über einen Schwingungsisolator 6 am Eingabeteil 2 an der der Eingabefläche 3 abgewandten Seite, beispielsweise im Bereich des Schwerpunkts des Eingabeteils 3 befestigt. Bei Beaufschlagung der Spule mit einem pulsförmigen Ansteuersignal übt die Spule 7 einen Impuls auf den Anker 8 aus, der über den Schwingungsisolator 6 auf das Eingabeteil übertragen wird, während die Zusatzmasse 10 mit der Spule 7 den Gegenimpuls aufnehmen. Um das Eingabeteil 2 von dem Nachschwingen der Zusatzmasse 10 samt Spule 7 so weit wie möglich zu entkoppeln, ist der Schwingungsisolator 6 vorgesehen. Dieser besteht im Wesentlichen aus einem Elastomer-Schaumstoff, der auf den für das Anliegen an das Bedienteil 2 und den Aktuator 4 vorgesehen Flächen mit einer Klebeschicht versehen ist. Um eine effektive Schwingungsisolation zu bewirken, ist die Eigenfrequenz des Schwingungssystems aus der Zusatzmasse 10 und seiner federnden Lagerung 11 in Bewegungsrichtung B um den Faktor A= √2 größer als die Eigenfrequenz des Schwingungsisolators 6.

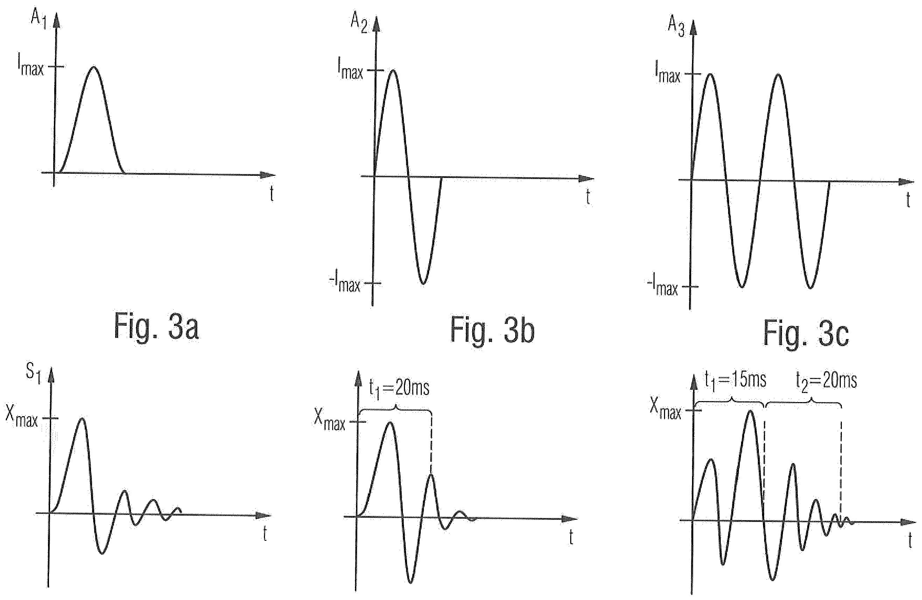

Die Figuren 3a bis 3c zeigen erfindungsgemäße Anregungssignale A₁ bis A₃ und zugehörige auf die Anregung folgende und dadurch bewirkte Systemantworten S₁ bis S₃, welche das jeweils auf der Eingabefläche 3 (der Fig. 1-2) beispielsweise mit einem Vibrometer abgetastete Schwingungsverhalten ist. So erzeugt das sich auf einen Impuls einer Polarität beschränkende Ansteuersignal A₁ und aufgrund der dämpfenden Wirkung des den Schwingungsdämpfer beinhaltenden Lagerungsmittel 12 (der Fig. 1-2) und aufgrund der dämpfenden Wirkung des Schwingungsisolators 6 (der Fig. 1-2) eine gedämpfte und eine somit abklingende Schwingung als Systemantwort S₁. Anregungssignal A₁ und Dämpfungen sind dabei so eingestellt, dass die maximal erreichbare Amplitude der Systemantwort, auch absolute Maximalamplitude Xₘₐₓ genannt, mit der ersten, wie hier gezeigt, oder spätestens zweiten Auslenkung erreicht wird.

Bevorzugt wird, wie Fig. 3b zeigt, darauf geachtet, dass das Ansteuersignal A₂ in Dauer und Verlauf, hier weist es eine Periode und damit eine Pulsfolge aus Pulsen entgegengesetzter Polarität auf, so ausgelegt ist, dass die maximal erreichbare Amplitude der Systemantwort, auch absolute Maximalamplitude Xₘₐₓ genannt, innerhalb eines Zeitfensters von < 20ms, erreicht ist, wobei das vorgenannte Zeitfenster durch den Beginn des Ansteuersignals angetriggert ist.

Figur 3c zeigt eine Ausführungsform des Ansteuersignals A₃ mit einer zwei Perioden umfassenden Pulsfolge. Anregungssignal A₃ und Dämpfungen sind so eingestellt, dass die maximal erreichbare Amplitude der Systemantwort, auch absolute Maximalamplitude Xₘₐₓ genannt, mit der zweiten Auslenkung erreicht wird. Ferner ist das Eingabeteil 2 (der Fig. 1-3) und/oder der Aktuator 4 (der Fig. 1-2) mittels des zu den Lagermitteln 12 (der Fig. 1-4) gehörigen Schwingungsdämpfers so bedämpft, dass die "Abklingzeit" der am Eingabeteil 2 (der Fig. 1-4) gemessenen Systemamplitude, gemessen von 100% der Maximalamplitude auf 10% oder weniger der Maximalamplitude, 20ms ist.

## Patentansprüche

1. Eingabeanordnung (1), aufweisend einen Träger (9), ein entlang wenigstens einer Bewegungsrichtung (B) mittels Lagerungsmittel (12) am Träger (9) schwingbeweglich gelagertes Eingabeteil (2) mit einer zur Berührung durch einen Bediener bestimmten Eingabefläche (3) und mit einer Berührdetektionseinrichtung (5) zur Detektion einer Berührung der Eingabefläche (3) durch den Bediener, einen elektromagnetischen Aktuator (4) zur Anregung einer Bewegung des Eingabeteils (2) entlang der Bewegungsrichtung (B) mittels eines elektrischen Ansteuersignals, um bei Berührung durch den Bediener ein haptisches Feedback bei dem Bediener zu erzeugen, wobei der Aktuator (4) eine federnd gelagerte Zusatzmasse (10) aufweist und der Aktuator (4) über einen Schwingungsisolator (6) an dem Eingabeteil (2) befestigt ist, wobei ferner die Lagerungsmittel (12) zur schwingbeweglichen Lagerung einen optionalen Schwingungsdämpfer zur Bewirkung einer Dämpfung der Bewegung des Eingabeteils (2) aufweisen; wobei das Ansteuersignal (A₁, A₂, A₃) und/oder eine durch den Schwingungsisolator (6) bewirkte Dämpfung und/oder eine durch den optionalen Schwingungsdämpfer bewirkte weitere Dämpfung so gewählt sind, dass ein absolute Maximalamplitude (Xₘₐₓ) einer am Eingabeteil (2) gemessenen Systemantwort (S₁, S₂, S₃) auf die durch das Ansteuersignal (A₁, A₂, A₃) getriggerte Anregung mittels des Aktuators (4) in einem ersten maximalen zeitlichen Abstand (t₁) von 20ms nach einem Start des Ansteuersignals (A₁, A₂, A₃) erfolgt; wobei das Ansteuersignal (A₁, A₂, A₃) und/oder die durch den Schwingungsisolator (6) bewirkte Dämpfung und/oder die durch den optionalen Schwingungsdämpfer bewirkte weitere Dämpfung so gewählt sind, dass ein Abklingzeitpunkt, bei dem die Maximalamplitude der Systemantwort (S₁, S₂, S₃) auf 10 % oder weniger der absoluten Maximalamplitude (Xₘₐₓ) abgeklungen ist, der vorher erreichten absoluten Maximalamplitude (Xₘₐₓ) in einem zweiten zeitlichen Abstand (t₂) von maximal 30ms folgt;
**dadurch gekennzeichnet, dass**
eine Eigenfrequenz des Schwingungssystems aus der Zusatzmasse (10) und seiner federnden Lagerung (11) um einen Faktor A= √2 größer ist als eine Eigenfrequenz des Schwingungsisolators (6).

2. Eingabeanordnung (1) gemäß Anspruch 1, wobei der Aktuator (4) bei Beaufschlagen mit einem elektrischen Ansteuersignal ein angetriebenes Teil (7, 8) aufweist, das über den Schwingungsisolator (6) am Eingabeteil (2) befestigt ist und an dem die Zusatzmasse (10) federnd gelagert ist.

3. Eingabeanordnung (1) gemäß einem der vorhergehenden Ansprüche, wobei der Aktuator (4) nicht am Träger (9) abgestützt ist.

4. Eingabeanordnung (1) gemäß einem der vorhergehenden Ansprüche, wobei der Aktuator (4) ausschließlich über den Schwingungsisolator (6) am Eingabeteil (2) befestigt ist.

5. Eingabeanordnung (1) gemäß einem der vorhergehenden Ansprüche, wobei der Aktuator (4) ausschließlich am Eingabeteil (2) befestigt ist.

6. Eingabeanordnung (1) gemäß einem der vorhergehenden Ansprüche, wobei der Schwingungsisolator (6) ganz oder teilweise aus einem Kunststoff, bevorzugt Elastomer, ausgebildet ist.

7. Eingabeanordnung (1) gemäß einem der vorhergehenden Ansprüche, wobei der Schwingungsisolator (6) ganz oder teilweise aus einem Schaumstoff, wie PUR-Schaumstoff, PE-Schaumstoff, Silikonelastomer, Silikonkautschuk, Moosgummi und/oder Zellkautschuk ausgebildet ist.

8. Eingabeanordnung (1) gemäß dem vorhergehenden Anspruch, wobei der Schwingungsisolator (6) als Integralschaumstoff ausgebildet ist.

9. Eingabeanordnung (1) gemäß einem der vorhergehenden Ansprüche, wobei der Aktuator (4) als Linear-Resonant-Actuator (LRA) ausgebildet ist.

10. Eingabeanordnung (1) gemäß einem der vorhergehenden Ansprüche, wobei eine Ansteuerelektronik zur Beaufschlagung des Aktuators (4) mit dem Ansteuersignal vorgesehen ist und das Ansteuersignal als Pulssignal, bevorzugt als Rechtecksignal, ausgebildet ist.

11. Verwendung der Eingabeanordnung (1) gemäß einem der vorhergehenden Ansprüche in einem Kraftfahrzeug.

## Claims

1. Input arrangement (1) having a carrier (9), an input part (2) which is mounted on the carrier (9) so as to oscillate along at least one direction of movement (B) by means of mounting means (12), said input part having an input surface (3) intended to be touched by an operator and having a touch detection device (5) for detecting when the operator touches the input surface (3), an electromagnetic actuator (4) for inducing a movement of the input part (2) along the direction of movement (B) by means of an electrical drive signal in order to generate haptic feedback for the operator when the operator touches the input part, wherein the actuator (4) has a resiliently mounted additional mass (10) and the actuator (4) is attached to the input part (2) via a vibration isolator (6), wherein the mounting means (12), for mounting so as to oscillate, further have an optional vibration damper for causing damping of the movement of the input part (2); wherein the drive signal (A₁, A₂, A₃) and/or damping caused by the vibration isolator (6) and/or further damping caused by the optional vibration damper are selected such that an absolute maximum amplitude (Xₘₐₓ) of a system response (S₁, S₂, S₃), measured at the input part (2), to the inducement triggered by the drive signal (A₁, A₂, A₃) is performed by means of the actuator (4) at a first maximum time interval (t₁) of 20 ms after the drive signal (A₁, A₂, A₃) starts; wherein the drive signal (A₁, A₂, A₃) and/or the damping caused by the vibration isolator (6) and/or the further damping caused by the optional vibration damper are selected such that a decay time, at which the maximum amplitude of the system response (S₁, S₂, S₃) has decayed to 10% or less of the absolute maximum amplitude (Xₘₐₓ), follows the previously achieved absolute maximum amplitude (Xₘₐₓ) in a second time interval (t₂) of at most 30 ms;
**characterized in that**
a natural frequency of the vibration system comprising the additional mass (10) and its resilient mount (11) is a factor of A=√2 greater than a natural frequency of the vibration isolator (6).

2. Input arrangement (1) according to Claim 1, wherein the actuator (4), when an electrical drive signal is applied to it, has a driven part (7, 8) which is attached to the input part (2) via the vibration isolator (6) and on which the additional mass (10) is resiliently mounted.

3. Input arrangement (1) according to either of the preceding claims, wherein the actuator (4) is not supported on the carrier (9).

4. Input arrangement (1) according to one of the preceding claims, wherein the actuator (4) is attached to the input part (2) exclusively via the vibration isolator (6).

5. Input arrangement (1) according to one of the preceding claims, wherein the actuator (4) is attached exclusively to the input part (2).

6. Input arrangement (1) according to one of the preceding claims, wherein the vibration isolator (6) is formed entirely or partially from a plastic, preferably an elastomer.

7. Input arrangement (1) according to one of the preceding claims, wherein the vibration isolator (6) is formed entirely or partially from a foam, such as polyurethane foam, polyethylene foam, silicone elastomer, silicone rubber, foam rubber and/or cellular rubber.

8. Input arrangement (1) according to the preceding claim, wherein the vibration isolator (6) is in the form of integral foam.

9. Input arrangement (1) according to one of the preceding claims, wherein the actuator (4) is in the form of a linear resonant actuator (LRA).

10. Input arrangement (1) according to one of the preceding claims, wherein drive electronics for applying the drive signal to the actuator (4) are provided and the drive signal is in the form of a pulse signal, preferably a square-wave signal.

11. Use of the input arrangement (1) according to one of the preceding claims in a motor vehicle.

## Revendications

1. Arrangement de saisie (1), comprenant un élément porteur (9), une partie de saisie (2) montée mobile en vibration le long d'au moins une direction de mouvement (B) au moyen de moyens supports (12) sur l'élément porteur (9) et comprenant une surface de saisie (3) conçue pour être touchée par un opérateur et comprenant un dispositif de détection de contact (5) destiné à détecter un toucher de la surface de saisie (3) par l'opérateur, un actionneur électromagnétique (4) destiné à exciter un mouvement de la partie de saisie (2) le long de la direction de mouvement (B) au moyen d'un signal de commande électrique, afin de générer une rétroaction haptique au niveau de l'opérateur lors du toucher par l'opérateur, l'actionneur (4) possédant une masse supplémentaire (10) montée sur ressort et l'actionneur (4) étant fixé à la partie de saisie (2) par le biais d'un isolateur de vibrations (6), les moyens supports (12) servant au montage mobile en vibration possédant en outre un amortisseur de vibrations optionnel destiné à produire un amortissement du mouvement de la partie de saisie (2) ; le signal de commande (A₁, A₂, A₃) et/ou un amortissement produit par l'isolateur de vibrations (6) et/ou un amortissement supplémentaire produit par l'amortisseur de vibrations optionnel étant choisis de telle sorte qu'une amplitude maximale absolue (Xₘₐₓ) d'une réponse du système (S₁, S₂, S₃) mesurée au niveau de la partie de saisie (2) a lieu sur l'excitation déclenchée par le signal de commande (A₁, A₂, A₃) au moyen de l'actionneur (4) dans un premier intervalle de temps (t₁) maximal de 20 ms après un démarrage du signal de commande (A₁, A₂, A₃) ; le signal de commande (A₁, A₂, A₃) et/ou l'amortissement produit par l'isolateur de vibrations (6) et/ou l'amortissement supplémentaire produit par l'amortisseur de vibrations optionnel étant choisis de telle sorte qu'un instant de décroissance, auquel l'amplitude maximale de la réponse du système (S₁, S₂, S₃) a décru à 10 % ou moins de l'amplitude maximale absolue (Xₘₐₓ), suit l'amplitude maximale absolue (Xₘₐₓ) atteinte précédemment dans un deuxième intervalle de temps (t₂) maximal de 30 ms ;
**caractérisé en ce que**
la fréquence propre du système vibrant composé de la masse supplémentaire (10) et de son support sur ressort (11) est supérieure d'un facteur A = √2 qu'une fréquence propre de l'isolateur de vibrations (6).

2. Arrangement de saisie (1) selon la revendication 1, l'actionneur (4), lorsqu'il est soumis à un signal de commande électrique, possédant une partie entraînée (7, 8), laquelle est fixée à la partie de saisie (2) par le biais de l'isolateur de vibrations (6) et montée sur ressort à la masse supplémentaire (10).

3. Arrangement de saisie (1) selon l'une des revendications précédentes, l'actionneur (4) n'étant pas en appui sur l'élément porteur (9).

4. Arrangement de saisie (1) selon l'une des revendications précédentes, l'actionneur (4) étant fixé à la partie de saisie (2) exclusivement par le biais de l'isolateur de vibrations (6).

5. Arrangement de saisie (1) selon l'une des revendications précédentes, l'actionneur (4) étant fixé exclusivement à la partie de saisie (2).

6. Arrangement de saisie (1) selon l'une des revendications précédentes, l'isolateur de vibrations (6) étant entièrement ou partiellement réalisé à partir d'une matière plastique, de préférence un élastomère.

7. Arrangement de saisie (1) selon l'une des revendications précédentes, l'isolateur de vibrations (6) étant entièrement ou partiellement réalisé à partir d'un produit alvéolaire, comme de la mousse de PUR, de la mousse de PE, de l'élastomère de silicone, du caoutchouc de silicone, du caoutchouc mousse et/ou du caoutchouc cellulaire.

8. Arrangement de saisie (1) selon l'une des revendications précédentes, l'isolateur de vibrations (6) étant réalisé sous la forme d'un produit alvéolaire intégral.

9. Arrangement de saisie (1) selon l'une des revendications précédentes, l'actionneur (4) étant réalisé sous la forme d'un actionneur résonant linéaire (LRA).

10. Arrangement de saisie (1) selon l'une des revendications précédentes, une électronique de commande destinée à solliciter l'actionneur (4) avec le signal de commande étant présente et le signal de commande étant réalisé sous la forme d'un signal impulsionnel, de préférence sous la forme d'un signal rectangulaire.

11. Utilisation d'un arrangement de saisie (1) selon l'une des revendications précédentes dans un véhicule automobile.
